# EUROPEAN PATENT SPECIFICATION

(11) **EP 3 681 001 B1**
(45) Date of publication and mention of the grant of the patent: **01.12.2021**
(21) Application number: 19000555.3
(22) Date of filing: 12.12.2019
(51) Int. Cl.: H02G 3/06

(54) **CABLE TRAY CONNECTING DEVICE**
KABELRINNENVERBINDUNGSVORRICHTUNG
DISPOSITIF DE CONNEXION DE CHEMIN DE CÂBLES

(30) Priority: 09.01.2019 SI 201900007
(43) Date of publication of application: 15.07.2020
(73) Proprietor: HERMI, d.o.o., 3000 Celje (SI)
(72) Inventor: Stvarnik, Bostjan, 3320 Velenje (SI)
(74) Representative: Golmajer Zima, Marjanca

(56) References cited:
- EP-A1- 0 578 459
- EP-A1- 0 712 189
- EP-A2- 0 315 023
- DE-U1-202007 009 424

## Description

### Object of invention

The object of the invention is a cable tray connecting device made of metal.

### Technical problem

The technical problem is how to configure a cable tray connecting device that will allow for fixing and firm connection of two cable trays having a full or shortened length in their longitudinal direction without overlapping in an easy way without using any tools and/or additional elements.

### Prior art

Electrical cables to be surface mounted in buildings are installed in dedicated cable trays for reasons of better organization, safety and aesthetics. A cable tray formed of perforated sheet metal is formed as a groove having a flat bottom and two lateral sides extending substantially perpendicularly to the bottom and the upper edge of which is formed as a flap towards the interior of the groove to increase strength and user friendliness, since a sharp edge is no longer present. A cable tray is of a certain standard length. In order to achieve an adequate length of cable trays during installation, the trays must be assembled into a cable tray system in such a way that arrays of appropriate lengths are formed. Cable trays should be assembled or/and shortened. Assembling of cable trays must be easy and quick, while the link must at the same time fit the cable tray in terms of strength.

A number of systems and devices have been developed that can be used to connect two cable trays without screwing. In case of joining cable trays by overlapping, a cable tray has an attachment at one free end, which is materially moulded to the free end or formed by bending the end of the tray into an attachment of a specific form. At least one formed cut-out is arranged on each lateral side of the attachment. The other free end of the cable tray has at least one tab formed on each lateral side complementary to the cut-out, which tab engages the cut-out when the cable trays are coupled. Two cable trays are assembled into a cable system by pushing a tray attachment comprising a tab into a tray attachment provided with a cut-out, the tab engaging the cut-out and forming a form-locking connection. Such assembly systems do not require additional elements, but as a rule more pins are required to create a sufficiently strong link. Consequently, the production of such elements is more complex and therefore economically questionable. In case a cable tray has to be shortened to be adjusted to the length of the array, the tray is usually cut off at one end. The cut-off end no longer comprises an attachment for joining cable trays, so additional joining elements are required to join such trays, most commonly such cable trays are joined by using an angular element and a screw connection. In this type of joining, an installer must be equipped with adequate elements for a screw connection and adequate tools.

In case when two cable trays are connected without overlapping, the connection is achieved by using an additional element or a device that connects and holds the two cable trays in direction of the longitudinal axis, such that the edge of the end of one cable tray abuts on the edge of the end of the other cable tray. The connection element must create a connection that is equivalent to the cable tray in terms of strength.

FR2723167 (see end of application) describes a device which is configured as an angle bracket with a web whose height is lower than the height of a lateral side of a cable tray, and a narrow flange that serves as a support for the web. The free upper edge of the web has a longitudinal projection integrally formed in the central part, which is essentially a continuation of the web and with which the connecting device is inserted into the edge tab, and has on each side of the longitudinal attachment two tabs that, in the mounted state, engage a respective longitudinal cut-out on the lateral side of the cable tray. The longitudinal attachment and two tabs fix the connecting device in a vertical direction. In the region of the web, which is closer to the flange, projections are arranged, which are formed by curving a partial cut-out, and run substantially parallel to the web. Also, the flange has two partial cut-outs with tabs that are curved parallel to the flange. The connecting device connects the cable trays such that the longitudinal attachment is inserted in an edge fold, respective tabs engage and are stuck into the longitudinal cut-outs of the lateral side of the cable tray, additional tabs on the web engage the complementary cut-outs on the lateral side, the projections of the web engage the complementary cut-outs on the lateral side, and the tabs of the flange engage the cut-outs of the bottom of the cable tray. The device is thus fixed in vertical direction. The device is then moved longitudinally, such that the tabs of the flange and the projections engage the complementary cut-outs. The connecting device is also fixed in the longitudinal direction. A connecting device of this type can only be used if the cut-outs of a cable tray and those of the connecting device are complementary to each other. A particular form of a tray requires its own connecting device. Numerous cut-outs and bent tabs make the device very demanding in terms of both the assembly and production. When a cable tray needs to be shortened to achieve the required length of the array, the shortening should be made in a way that even after the shortening, the cut-outs on the cable tray match the cut-outs and tabs on the connecting device. This kind of shortening is not always easy or even possible. In such cases, the most commonly used type of connection is a screw connection. An additional, yet not negligible disadvantage of the connecting device described is the strength of the joint itself and consequently the load-carrying capacity of the cable tray, especially for trays of larger dimensions. The tray connecting device is arranged merely along the lateral sides of a cable tray, while a coupling line where the two free edges of a respective tray are connected is free and without reinforcement. The load-carrying capacity of the cable tray in this part is considerably reduced. The contact between the tray connecting device and a cable tray is done via a tab in the groove, the tab in the groove being loosely arranged and therefore not ensuring a permanent contact. As a result, no permanent galvanic joint is guaranteed.

DE8901613 U1 discloses a cable tray connecting device without overlapping. It is substantially a flat plate with a single curved longitudinal edge, wherein the curvature of the edge matches the curvature of the upper edge of the cable tray from the inside. On the opposite longitudinal edge, at least one attachment in the form of a straight tab is integrally moulded, said tab being pushed into the cut-out at the bottom of the cable tray, in the form of a rectangularly curved tab, which engages a complementary cut-out at the bottom of the cable tray, or in the form of a longitudinal attachment with tabs, wherein the attachment extends perpendicularly to the plate and serves as a point of attachment of the connecting device to the bottom of the tray. A connecting device of this type is quite easy to manufacture, yet does not allow for a reliable fixed connection of two cable trays. If the height of the plate is not precisely adjusted to the height of the lateral side of the cable tray, the connecting device is not properly fixed in the cable tray and, consequently, the cable tray connection is not fixed, it is weak in terms of strength, or it is difficult to mount because of its excessive size, wherein individual parts can get deformed and still further impair the quality of the joint. When a cable tray needs to be shortened to achieve the required length of the array, the shortening should be made in a way that even after the shortening, the cut-outs on the cable tray match the tabs on the connecting device. This kind of shortening is not always easy or even possible. In such cases, the most commonly used type of connection is a screw connection. In case the cable trays need to be disassembled, the connecting device gets damaged when removed and can no longer be used; the cable trays get deformed as well. The mechanical strength of the joint established with the described connecting device is poorer than the mechanical strength of the cable tray, this is particularly true for cable trays of wider dimensions. The galvanic connection between the individual trays is also questionable.

EP 0 578 459 A1 (Spencer) discloses a cable tray connecting device made of a blank having weakening lines perpendicular to the longitudinal direction of the connecting device. These weakening lines enable to bend the blank vertically downwards or upwards in erected condition.

DE 20 2007 009424 U1 (Tehalit GmbH) discloses a connector for grounding coupling for equipotential bonding for line routing channels made of metal having a ceiling element and a side element arranged at a channel outer wall. The side element has a support strip to support the component and equipotential bonding. The underside of the support strip is designed in the shape of a jagged edge.

### Solution to the technical problem

The technical problem is solved by a cable tray connecting device of the invention, said device consisting of a metal band comprising four mutually parallel and spaced weakening lines formed as perforations to reduce strength, such that the metal band can be curved manually along a weakening line without using any additional tool, wherein the weakening lines delimit the metal band into a central portion, two outer lateral portions adjacent to the central portion, and two inner lateral portions adjacent to a respective outer lateral portion, said inner lateral portions at each free end having an edge with more than one materially integrally moulded tooth, the edge being preferably in the form of a saw with a set of teeth that are wedged into the bottom of a cable tray in the mounted state of the device.

The weakening lines are arranged to coincide with the longitudinal edges of the cable tray in the mounting state, i.e. with the respective edge of the bottom and the upper curved edge of the respective lateral side of the tray.

The cable tray connecting device, when mounted on cable trays frontally facing one another, substantially encloses the cable trays in the contact area along their entire outer circumference and their inner lateral sides. As a result, such a connection of two cable trays has a mechanical strength that is even greater than the mechanical strength of the basic cable tray. At the same time, the weakening lines in the form of perforations reduce the mechanical strength of the material to such an extent that the user can manually bend the metal band without using any tool so that the band perfectly fits the outer circumference of a cable tray and the inner side of a respective lateral side.

To further secure the device to a cable tray, a portion of the band that fits the outer side of a respective lateral side of a cable tray, i.e. the outer lateral portion, is provided with outer cut-outs, and a portion of the band that fits the inner side of a respective lateral side of a cable tray, i.e. the inner lateral portion, is provided with tabs that can be locked into a respective complementary outer cut-out in the outer lateral portion in the mounted state. By inserting the tab(s) into the outer cut-out(s), the connection device is still additionally fixed to a cable tray.

The cable tray connecting device of the invention can be easily mounted on cut-off/shortened cable trays, since its installation and fastening to a cable tray is independent of the form and cut-outs on individual portions of a cable tray, this is why the device of the invention can be widely used. As a result, the manufacturing costs are reduced because the number of components required to assemble a system of cable trays is reduced.

A further advantage of the cable tray connecting device of the invention is that, through a set of teeth that are wedged into the bottom of a cable tray and create a constant connection with the cable tray, it provides electrical continuity of the contact between two cable trays that is required for such products, so no additional galvanic interconnection of all metal parts is required.

The cable tray connecting device of the invention is simple in design, which allows not only for an easy assembly but also for easy manufacturing which does not require special machines and tools, but can be manufactured on the same machines as the basic cable tray.

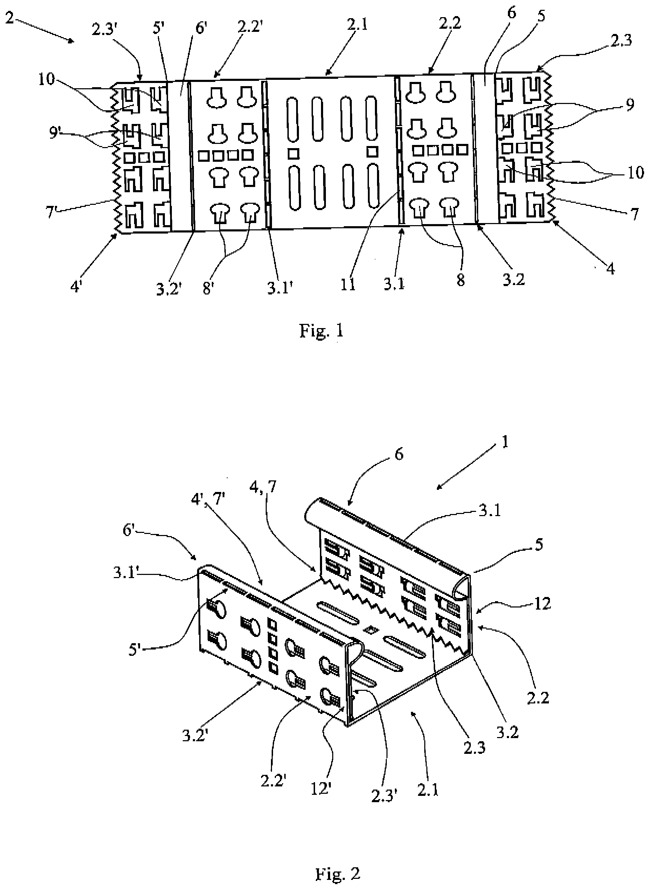

The cable tray connecting device of the invention will be described in more detail below by way of an embodiment and drawings representing in
Fig. 1 a cable tray connecting device in an unfolded state, prior to mounting
Fig. 2 a cable tray connecting device in the form as mounted on a cable tray.

A cable tray that is not part of the present invention is formed as a U-formed groove having a flat bottom and two lateral sides extending substantially perpendicularly to the bottom and the upper edge of which is formed as a flap towards the interior of the groove to increase strength and user friendliness, since a sharp edge is no longer present. A cable tray is formed by bending a metal band which usually contains longitudinal cut-outs for assembly reasons and to reduce the weight and to cool the laid cables. Cable trays are joined/assembled into arrays. In order to achieve the required length of the array, a certain number of cable trays, whose lengths must also be adjusted, shortened, need to be joined.

Two cable trays are joined by a cable tray connecting device 1 which is formed of a metal band 2. The metal band 2 has a length greater than the width, the length of the band being greater than the width of the unfolded cable tray. The metal band 2 consists of a central portion 2.1, two outer lateral portions 2.2 and 2.2' arranged adjacent on each side of the central portion 2.1, and two inner lateral portions 2.3 and 2.3' adjacent to the outer lateral portions 2.2, 2.2' and substantially representing the outer portions of the metal band 2. Individual portions are delimited by weakening lines 3.1, 3.2; 3.1', 3.2' in the form of perforations, i.e. a set of sequentially arranged minimum cut-outs 11. The arrangement and size of cut-outs 11 of the perforations on each weakening line 3.1, 3.2; 3.1', 3.2' is such that the mechanical strength of the material is reduced to such an extent that the material can be manually bent along a weakening line without using any additional tools, yet the material's mechanical strength is high enough to withstand the loads of the tray. Each inner lateral portion 2.3, 2.3' has a free edge 4, 4' formed as a set of teeth 7, 7' that are preferably of a triangular form, but not limited to this form. An inner edge 5, 5' of the inner lateral portion 2.3, 2.3' adjacent to the outer lateral portion 2.2, 2.2' is - in the case where two cable trays to be joined have the upper edge curved into a semi-circular flap - curved in the form of a longitudinal groove 6, 6' such that the latter is in form complementary to the semi-circular longitudinal flap of the cable tray.

Two cable trays to be joined and facing each other with their edges are connected by the cable tray connecting device 1, such that said device is positioned with its central portion 2.1 of the metal band 2 below the bottom of a cable tray. Then the band 2 is bent along the first weakening line 3.1, 3.1' substantially perpendicularly to the base and tightly fitting each lateral side of the cable tray. The second bending is made along the second weakening line 3.2, 3.2' such that the previously made longitudinal groove 6, 6' encloses the semi-circular tab of the cable tray and a respective inner lateral portion 2.3, 2.3' closely fits the lateral side of the cable tray. The teeth 7, 7' engage the bottom of the cable tray and fix the cable tray connecting device 1 to the cable tray.

When mounted, the cable tray connecting device 1 is formed as a U-formed groove having a flat bottom, which is the central portion 2.1, and the lateral sides 12, 12' that extend substantially perpendicularly to the central portion 2.1. Each respective lateral side 12, 12' is connected in a form-locking manner with the central portion 2.1 through the first weakening line 3.1, 3.1' in the form of perforations. Each respective first weakening line 3.1, 3.1' extends over the entire length of the cable tray connecting device 1 or over the entire width of the band 2, of which the cable tray connecting device 1 is formed.

Each lateral side 12, 12' comprises an outer lateral portion 2.2, 2.2' and an inner lateral portion 2.3, 2.3' in the form of a flap extending into the interior of the groove in parallel to the outer lateral portion 2.2, 2.2' and is connected to the outer lateral portion 2.2, 2.2' through the second weakening line 3.2, 3.2' in the form of perforations. In the portion adjacent to the second weakening line 3.2, 3.2', the inner lateral portion 2.3, 2.3' is formed as a longitudinal groove 6, 6', which is complementary in form to the semi-circular longitudinal flap of the cable tray. The free end of the inner lateral portion 2.3, 2.3' has an edge 4, 4' formed as a set of teeth 7, 7' that are preferably of a triangular form.

In the mounted state of the cable tray connecting device 1, the lateral side 12, 12' encloses the lateral side of the cable tray in such a way that the outer lateral portion 2.2, 2.2' of the lateral side of the device abuts the outer side of the lateral side of the cable tray, the inner lateral portion 2.3, 2.3' of the lateral side of the device abuts the inner side of the lateral side of the cable tray, and the lateral side of the cable tray lies between the outer 2.2, 2.2' and the inner lateral portion 2.3, 2.3' of the lateral side 12, 12'. The teeth 7, 7' engage the bottom of the cable tray.

The cable tray connecting device 1 is made of a metal electrically conductive sheet metal material.

As the teeth 7, 7' of the cable tray connecting device 1 engage the bottom of the cable tray, a constant contact between the cable tray connecting device 1 is ensured, thus ensuring mutual electrical conductivity and no additional galvanic connection between the two elements is required.

To allow additional fixing of the cable tray connecting device 1 with the cable trays, said device 1 is provided on the outer 2.2, 2.2' and the inner lateral portion 2.3, 2.3' with additional formed cut-outs 8, 8'; 9, 9'. The formed outer cut-outs 8, 8' are arranged on the outer lateral portion 2.2, 2.2', into which cut-outs tabs 10, 10' formed in the complementary formed cut-outs 9, 9' engage. In the mounted state of the cable tray connecting device 1, the tabs 10, 10' are inserted into the formed cut-outs 8, 8' using a screwdriver. To join small-size cable trays into arrays no additional formed cut-outs 8, 8'; 9, 9' with tabs are required.

As the cable tray connecting device 1 is positioned and fixed on the cable tray without using any part of the cable tray, it can be used for both full-length cable trays and shorter-length cable trays without any modification. The cable tray connecting device 1 of the invention can be used for all types of cable trays.

The cable tray connecting device 1 of the invention is preferably used to connect cable trays that frontally face each other without overlapping, yet is not limited merely to such use. The described cable tray connecting device 1 can also be used to join cable trays by overlapping without any structural amendments or modifications.

## Claims

1. A cable tray connecting device (1) made of metal that is formed as a U-formed groove with a flat central portion (2.1) and lateral sides (12, 12') extending substantially perpendicularly to the central portion (2.1), wherein
each respective lateral side (12, 12') is connected in a form-locking manner with the central portion (2.1) through a first weakening line (3.1, 3.1') in the form of perforations;
each lateral side (12, 12') comprises an outer lateral portion (2.2, 2.2') and an inner lateral portion (2.3, 2.3') in the form of a flap extending into the interior of the groove in parallel to the outer lateral portion (2.2, 2.2') and is connected to the outer lateral portion (2.2, 2.2') through a second weakening line (3.2, 3.2') in the form of perforations;
the free end of the inner lateral portion (2.3, 2.3') has an edge (4, 4') formed as a set of teeth (7, 7').

2. The device (1) according to claim 1, **characterized in that** each respective first weakening line (3.1, 3.1') extends over the entire length of the device (1).

3. The device (1) according to any preceding claim, **characterized in that** the inner lateral portion (2.3, 2.3') is provided in the portion adjacent to the second weakening line (3.2, 3.2') with a longitudinal groove (6, 6').

4. The device (1) according to any preceding claim, **characterized in that** the teeth (7, 7') have a triangular form.

5. The device (1) according to any preceding claim, **characterized by** being provided on the outer lateral portion (2.2, 2.2') with outer cut-outs (8, 8') and being provided on the inner lateral portion (2.3, 2.3') with formed cut-outs (9, 9') that are complementary to the outer cut-outs (8, 8').

6. The device (1) according to claim 5, **characterized in that** the complementary formed cut-outs (9, 9') have tabs (10, 10') that engage the outer cut-outs (8, 8').

7. A method for forming said cable tray connecting device (1) according to any preceding claim comprising a step of folding a metal band (2), the length of which is larger than the unfolded width of the cable tray.

8. The method according to claim 7, wherein the metal band (2) consists of a central portion (2.1), two outer lateral portions (2.2, 2.2') arranged adjacent on each side of the central portion (2.1), and two inner lateral portions (2.3, 2.3') adjacent to the outer lateral portions (2.2, 2.2'), wherein individual portions are delimited by weakening lines (3.1, 3.2; 3.1', 3.2') in the form of perforations,
each inner lateral portion (2.3, 2.3') has a free edge (4, 4') formed as a set of teeth (7, 7') of a triangular form, and
an inner edge (5, 5') of the inner lateral portion (2.3, 2.3') adjacent to the outer lateral portion (2.2, 2.2') is curved in the form of a longitudinal groove (6, 6').

## Patentansprüche

1. Kabelrinnenverbindungsvorrichtung (1) aus Metall, die als U-förmige Nut mit einem flachen Mittelabschnitt (2.1) und lateralen Seiten (12, 12'), die sich im Wesentlichen senkrecht zum Mittelteil (2.1) erstrecken, ausgebildet ist, wobei jede jeweilige laterale Seite (12, 12') durch eine erste Schwächungslinie (3.1, 3.1') in Form von Perforationen formschlüssig mit dem Mittelabschnitt (2.1) verbunden ist;
jede laterale Seite (12, 12') einen äußeren lateralen Abschnitt (2.2, 2.2') und einen inneren lateralen Abschnitt (2.3, 2.3') in Form einer Klappe umfasst, die sich parallel zum äußeren lateralen Abschnitt (2.2, 2.2') in das Innere der Nut erstreckt und mit dem äußeren lateralen Abschnitt (2.2, 2.2') durch eine zweite Schwächungslinie (3.2, 3.2') in Form von Perforationen verbunden ist;
das freie Ende des inneren lateralen Abschnitts (2.3, 2.3') eine als ein Satz von Zähnen (7, 7') ausgebildete Kante (4, 4') aufweist.

2. Vorrichtung (1) nach Anspruch 1, **dadurch gekennzeichnet, dass** sich jede jeweilige erste Schwächungslinie (3.1, 3.1') über die gesamte Länge der Vorrichtung (1) erstreckt.

3. Vorrichtung (1) nach einem der vorhergehenden Ansprüche, **dadurch gekennzeichnet, dass** der innere laterale Abschnitt (2.3, 2.3') in dem an die zweite Schwächungslinie (3.2, 3.2') angrenzenden Abschnitt mit einer Längsnut (6, 6') versehen ist.

4. Vorrichtung (1) nach einem der vorhergehenden Ansprüche, **dadurch gekennzeichnet, dass** die Zähne (7, 7') eine dreieckige Form aufweisen.

5. Vorrichtung (1) nach einem der vorhergehenden Ansprüche, **dadurch gekennzeichnet, dass** sie an dem äußeren lateralen Abschnitt (2.2, 2.2') mit äußeren Aussparungen (8, 8') versehen ist und an dem inneren lateralen Abschnitt (2.3, 2.3') mit geformten Aussparungen (9, 9') versehen ist, die komplementär zu den äußeren Aussparungen (8, 8') sind.

6. Vorrichtung (1) nach Anspruch 5, **dadurch gekennzeichnet, dass** die komplementär geformten Aussparungen (9, 9') Laschen (10, 10') aufweisen, die in die äußeren Aussparungen (8, 8') eingreifen.

7. Verfahren zum Ausbilden der Kabelrinnenverbindungsvorrichtung (1) nach einem der vorhergehenden Ansprüche, umfassend einen Schritt des Faltens eines Metallbandes (2), dessen Länge größer als die entfaltete Breite der Kabelrinne ist.

8. Verfahren nach Anspruch 7, wobei das Metallband (2) aus einem Mittelabschnitt (2.1), zwei äußeren lateralen Abschnitten (2.2, 2.2'), die auf jeder Seite des Mittelabschnitts (2.1) angrenzend angeordnet sind, und zwei inneren lateralen Abschnitten (2.3, 2.3'), die an die äußeren lateralen Abschnitte (2.2, 2.2') angrenzen, besteht, wobei die einzelnen Abschnitte durch Schwächungslinien (3.1, 3.2; 3.1', 3.2') in Form von Perforationen begrenzt sind,
jeder innere laterale Abschnitt (2.3, 2.3') eine freie Kante (4, 4') aufweist, die als ein Satz von Zähnen (7, 7') mit einer dreieckigen Form ausgebildet ist, und
eine an den äußeren lateralen Abschnitt (2.2, 2.2') angrenzende innere Kante (5, 5') des inneren lateralen Abschnitts (2.3, 2.3') in Form einer Längsnut (6, 6') gekrümmt ist.

## Revendications

1. Dispositif de connexion de chemin de câbles (1) en métal qui est formé comme une gorge en U avec une partie centrale plate (2.1) et des côtés latéraux (12, 12') s'étendant sensiblement perpendiculairement à la partie centrale (2.1), dans lequel chaque côté latéral (12, 12') respectif est connecté par verrouillage de forme avec la partie centrale (2.1) par le biais d'une première ligne de fragilisation (3.1, 3.1') sous la forme de perforations ;
chaque côté latéral (12, 12') comprend une partie latérale externe (2.2, 2.2') et une partie latérale interne (2.3, 2.3') sous la forme d'un volet s'étendant à l'intérieur de la gorge en parallèle à la partie latérale externe (2.2, 2.2') et est connecté à la partie latérale externe (2.2, 2.2') par le biais d'une seconde ligne de fragilisation (3.2, 3.2') sous la forme de perforations ;
l'extrémité libre de la partie latérale interne (2.3, 2.3') a un bord (4, 4') formé comme un ensemble de dents (7, 7').

2. Dispositif (1) selon la revendication 1, **caractérisé en ce que** chaque première ligne de fragilisation (3.1, 3.1') respective s'étend sur toute la longueur du dispositif (1).

3. Dispositif (1) selon l'une quelconque des revendications précédentes, **caractérisé en ce que** la partie latérale interne (2.3, 2.3') est pourvue dans la partie adjacente à la seconde ligne de fragilisation (3.2, 3.2') d'une gorge longitudinale (6, 6').

4. Dispositif (1) selon l'une quelconque des revendications précédentes, **caractérisé en ce que** les dents (7, 7') ont une forme triangulaire.

5. Dispositif (1) selon l'une quelconque des revendications précédentes, caractérisé comme étant pourvu sur la partie latérale externe (2.2, 2.2') de découpes externes (8, 8') et comme étant pourvu sur la partie latérale interne (2.3, 2.3') de découpes formées (9, 9') qui sont complémentaires des découpes externes (8, 8').

6. Dispositif (1) selon la revendication 5, **caractérisé en ce que** les découpes formées complémentaires (9, 9') ont des languettes (10, 10') qui se mettent en prise avec les découpes externes (8, 8').

7. Procédé de formation dudit dispositif de connexion de chemin de câbles (1) selon une quelconque revendication précédente comprenant une étape de pliage d'une bande métallique (2), dont la longueur est supérieure à la largeur dépliée du chemin de câbles.

8. Procédé selon la revendication 7, dans lequel la bande métallique (2) consiste en une partie centrale (2.1), deux parties latérales externes (2.2, 2.2') agencées de manière adjacente sur chaque côté de la partie centrale (2.1), et deux parties latérales internes (2.3, 2.3') adjacentes aux parties latérales externes (2.2, 2.2'), dans lequel des parties individuelles sont délimitées par des lignes de fragilisation (3.1, 3.2; 3.1', 3.2') sous la forme de perforations,
chaque partie latérale interne (2.3, 2.3') a un bord libre (4, 4') formé comme un ensemble de dents (7, 7') d'une forme triangulaire, et
un bord interne (5, 5') de la partie latérale interne (2.3, 2.3') adjacent à la partie latérale externe (2.2, 2.2') est incurvé sous la forme d'une gorge longitudinale (6, 6').
